# EUROPEAN PATENT APPLICATION

(11) **EP 4 462 575 A1**
(43) Date of publication of application: **13.11.2024**
(21) Application number: 23898221.9
(22) Date of filing: 24.11.2023
(51) Int. Cl.: H01M 50/291, H01M 50/262, H01M 50/204, H01M 50/207, H01M 50/233

(54) **BATTERY PACK**

(30) Priority: 02.12.2022 KR 20220166606; 21.03.2023 KR 20230036402
(71) Applicant: LG Energy Solution, Ltd., Seoul 07335 (KR)
(72) Inventor: SHIN, Ju Hwan, Daejeon 34122 (KR); HUR, Nam Hoon, Daejeon 34122 (KR); JEON, Jong Pil, Daejeon 34122 (KR)
(74) Representative: Plasseraud IP
(86) International application number: PCT/KR2023/019139
(87) International publication number: WO 2024/117690

(57) **Abstract**

A battery pack includes a base plate, a front frame forming a front of the base plate, a rear frame forming a rear of the base plate, a pair of side frames coupled to the front and rear frames, and a plurality of battery cell assemblies loaded within a receiving space formed by the front frame, the rear frame, and the pair of side frames, wherein each of the battery cell assemblies includes: a battery cell unit comprising a plurality of cell laminates, and a busbar frame assembly mechanically and electrically coupled to the plurality of cell laminates at transverse ends from which leads of the cell laminates protrude, and a first battery cross beam coupling to the busbar frame assembly at a front of the battery cell unit, and a second battery cross beam coupling to the busbar frame assembly at a rear of the battery cell unit.

## Description

### [Technical Field]

The present invention relates to a battery pack, and more particularly to a battery pack having a battery cross beam corresponding to the full width length of the battery pack, which improves the structural rigidity and space utilization of the pack case, facilitates the in-pack mounting of the battery cell assembly, simplifies the assembly process, and ensures a solid fixed state.

This application claims the benefit of priority based on Korean Patent Application No. 10-2022-0166606, filed on December 02, 2022, and Korean Patent Application No. 10-2023-0036402, filed on March 21, 2023, and the entire contents of the Korean patent application are incorporated herein by reference.

### [Background Art]

Cell-to-pack battery packs have been proposed to improve the space utilization of battery packs. The cell-to-pack structure has the advantage of improving the space utilization of the battery pack by assembling a plurality of cells directly into the battery pack without modularization.

As separate module housings are omitted or simplified in cell-to-pack structures, it becomes important to ensure the stiffness of the battery pack. For example, a plurality of cells forming a battery cell assembly (corresponding to a conventional battery module) can be coupled to a side frame, and the side frame of the battery cell assembly housed in the pack case can be designed to act as the cross beam of a conventional battery pack.

However, when a plurality of cell assemblies is arranged in the width direction of the pack case to increase the capacity of the battery pack, the side frames of adjacent cell assemblies facing each other in the width direction center of the battery pack are not connected to each other, which weakens the structural stiffness of the battery pack.

To solve this problem, a structure can be designed in which a center beam is placed at the length direction center of the battery pack, and the side frames that are not connected to each other are connected and fixed to the center beam. However, this combination of side frames and center beams complicates the assembly process of the battery pack, increases the weight of the battery pack as the number of parts increases, and reduces the energy density of the battery pack by reducing the space utilization as previously.

### [Disclosure]

### [Technical Problem]

The present invention is directed to providing a battery pack of a cell-to-pack structure that can maintain good rigidity in a simplified structure and can simplify the process of mounting a plurality of cell assemblies into a pack case.

However, the technical problem to be solved by the present invention is not limited to the above-described problem, and other problems not mentioned can be clearly understood by a person skilled in the art from the description of the invention described below.

### [Technical Solution]

The present invention relates to a battery pack, in one example comprising: a base plate, a front frame forming a front of the base plate, a rear frame forming a rear of the base plate, a pair of side frames coupled at both ends to the front and rear frames, and a plurality of battery cell assemblies loaded within a receiving space formed by the front frame, the rear frame, and the pair of side frames, wherein each of the battery cell assemblies comprises: a battery cell unit comprising a plurality of cell laminates, and a busbar frame assembly mechanically and electrically coupled to the plurality of cell laminates at transverse ends from which leads of the cell laminates protrude, and a first battery cross beam coupling to the busbar frame assembly at a front of the battery cell unit, and a second battery cross beam coupling to the busbar frame assembly at a rear of the battery cell unit, wherein the plurality of battery cell assemblies are fixed to the base plate by overlapping above and below the first battery cross beam and the second battery cross beam opposite each other in a front-to-back direction of adjacent battery cell assemblies.

In one embodiment, the first and second battery cross beams may have a length corresponding to a distance between the pair of side frames.

Further, the first and second battery cross beams may be coupled to a busbar frame assembly provided in each of the plurality of battery cell units.

The first battery cross beam may comprise a protruding lower step, the second battery cross beam may comprise a protruding upper step, and the first and second battery cross beams may form a complementary shape overlapping above and below by engaging the upper step with respect to the lower step to form an overlapping above and below.

The plurality of battery cell assemblies may be fixed to the base plate by bolts threaded through the first and second battery cross beams, which are overlapped above and below, and fixed to the base plate.

According to one embodiment of the present invention, the rear frame comprises a lower projecting portion corresponding to the lower step of the first battery cross beam, and the battery cell assembly nearest to the rear frame can be fixed to the base plate with the upper step of the second battery cross beam overlapping above and below the lower projecting portion.

Also, further comprising a dummy cross beam shaped to correspond to the upper step of the second battery cross beam, wherein the cell assembly nearest to the front frame may be fixed to the base plate with the lower step of the first battery cross beam overlapping above and below the upper step of the second battery cross beam.

Meanwhile, a battery pack according to one embodiment of the present invention, comprising: a base plate; a front frame forming a front of the base plate; a rear frame forming a rear of the base plate; and a method of manufacturing a pack case comprising: a first step of preparing the pack case, the pack case comprising: a front frame forming a front of the base plate, a rear frame forming a rear of the base plate, and a pair of side frames coupled at both ends to the front frame and the rear frame, a second step of preparing a battery cell assembly by preparing a first battery cross beam having a protruding lower step, and a second battery cross beam having a complementary shaped upper step that can be superimposed on the lower step, and fixing a battery cell unit between the first and second battery cross beams arranged in parallel, a third step of fixing the battery cell assembly on the base plate with the first and second battery cross beams of the battery cell assembly facing in a left and right direction of the pack case; a fourth step of preparing a new battery cell assembly through the second step, and seating the new battery cell assembly by overlapping above and below an upper step of a second battery cross beam of the new battery cell assembly and the lower step of the first battery cross beam of the battery cell assembly fixed on the base plate through the third step, so as to fix the new battery cell assembly to the base plate, and a fifth step of fixing the new battery cell assembly on the base plate through a fourth step, and repeating the fourth step in a direction from the rear to the front of the pack case, so as to fill all of the receiving space of the pack case.

In the second step, the first and second battery cross beams may have a length corresponding to a distance between the pair of side frames.

Further, in the second step, a plurality of battery cell units can be fixed between the first and second battery cross beams arranged in parallel.

According to an embodiment, in the first step, the rear frame comprises a lower projecting portion corresponding to a lower step of the first battery cross beam, and in the third step, the first cell assembly to be loaded in the pack case may be fixed to the base plate such that the upper step of the second battery cross beam overlaps above and below the lower projecting portion of the rear frame.

In the fourth step, the new battery cell assembly may be fixed to the base plate by bolts screwed to the base plate threaded through the first and second battery cross beams overlapped above and below.

Further, in the fifth step, a dummy cross beam in the shape corresponding to the upper step of the second battery cross beam may be prepared, and the last battery cell assembly to be loaded into the pack case may be fixed to the base plate by means of the dummy cross beam overlapping above and below the lower step of the first battery cross beam.

### [Advantageous Effects]

In the battery pack of the present invention with the above structure, the battery cross beams comprising the battery cell assemblies are overlapped, within the pack case, with the battery cross beams of other neighboring battery cell assemblies. Thus, the battery cell assemblies can be fixed to the base plate by utilizing the weights of other neighboring battery cell assemblies, and once all the battery cell assemblies are loaded, they are in solid fixed state by the overlapping structure between the battery cross beams.

Furthermore, by fixing a plurality of battery cell units to a pair of battery cross beams, the number of assembly processes of the battery pack is reduced, thereby improving productivity, and by making the length of the battery cross beams correspond to the overall length of the pack case, the rigidity of the pack case can be maintained without the construction of a center beam, and the number of components is reduced, thereby making the battery pack lighter and improving space utilization.

In addition, by utilizing a structure in which the battery cross beams overlap between adjacent battery cell assemblies, the battery cell assemblies can be fixed with bolts that thread through the overlapping battery cross beams and into the base plate. This bolted fixation allows for the elimination of welding to the cross beams, which improves the productivity of the battery pack and improves space utilization by eliminating interference from welding beads.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a drawing of a battery pack according to one embodiment of the present invention.
FIG. 2 is a drawing of the battery pack of FIG. 1 with the frontmost battery cell assembly removed from the battery pack.
FIG. 3 is a perspective view of the battery cell assembly.
FIG. 4 is a side view of the battery cell assembly of FIG. 3.
FIG. 5 is a side view with the side frame removed from the battery pack of FIG. 1.
FIG. 6 is a cross-sectional view showing an enlarged view of the "A" portion of FIG. 5.
FIG. 7 is a cross-sectional view illustrating the structure with the battery cell assembly secured to the rear frame.
FIG. 8 is a cross-sectional view illustrating a structure in which the frontmost cell assembly is fixed relative to the base plate.
FIG. 9 is a cross-sectional view of the pack case with the first battery cell assembly loaded into the pack case.
FIG. 10 is a diagram illustrating the next battery cell assembly loaded into the pack case.
FIG. 11 is a cross-sectional view illustrating a last battery cell assembly loaded into the pack case.

### [Best Mode]

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a battery pack, in one example comprising a base plate, a front frame forming a front of the base plate, a rear frame forming a rear of the base plate, a pair of side frames coupled at both ends to the front frame and the rear frame, and a plurality of battery cell assemblies loaded within a receiving space formed by the front frame, the rear frame, and the pair of side frames.

Each of each of the battery cell assemblies comprises: a battery cell unit comprising a plurality of cell laminates, and a busbar frame assembly mechanically and electrically coupled to the plurality of cell laminates at transverse ends from which leads of the cell laminates protrude; a first battery cross beam coupled to the busbar frame assembly at a front of the battery cell unit; and a second battery cross beam coupled to the busbar frame assembly at a rear of the battery cell unit.

The plurality of battery cell assemblies are fixed to the base plate by means of first and second battery cross beams that are overlapped above and below each other in the front-to-back direction of adjacent battery cell assemblies.

For example, the plurality of battery cell assemblies may be fixed to the base plate by bolts threaded through the first and second battery cross beams overlapping each other in the front and back directions of adjacent battery cell assemblies and fixed to the base plate.

In a battery pack of the present invention with such a structure, the battery cross beams comprising the battery cell assemblies overlap above and below, within the pack case, with the battery cross beams of other neighboring battery cell assemblies. Thus, the battery cell assemblies can be fixed to the base plate by utilizing the weights of other neighboring battery cell assemblies, and once all the battery cell assemblies are loaded, they are in solid fixed state by the overlapping structure between the battery cross beams.

Furthermore, by utilizing a structure in which the battery cross beams overlap between adjacent battery cell assemblies, the battery cell assemblies can be fixed with bolts that penetrate the overlapping battery cross beams and thread into the base plate. This bolted fixation allows for the elimination of welding to the cross beams, and the elimination of welding increases the productivity of the battery pack and improves space utilization by eliminating interference from welding beads.

### [Mode for Invention]

Hereinafter, specific embodiments of a secondary battery of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

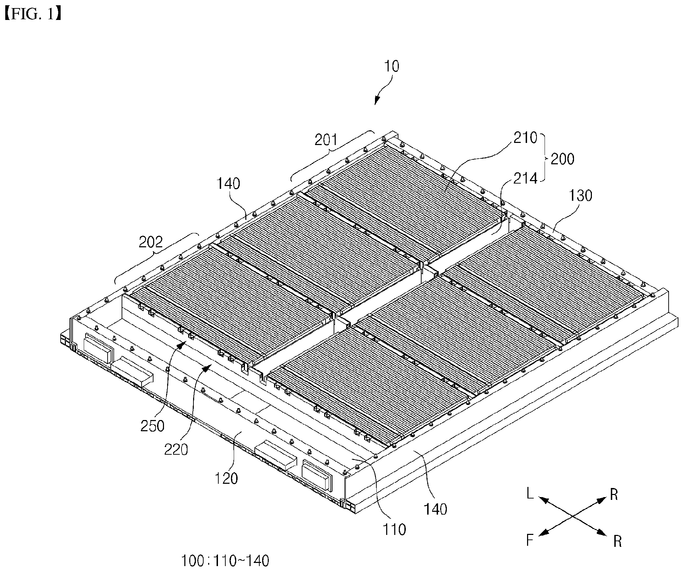

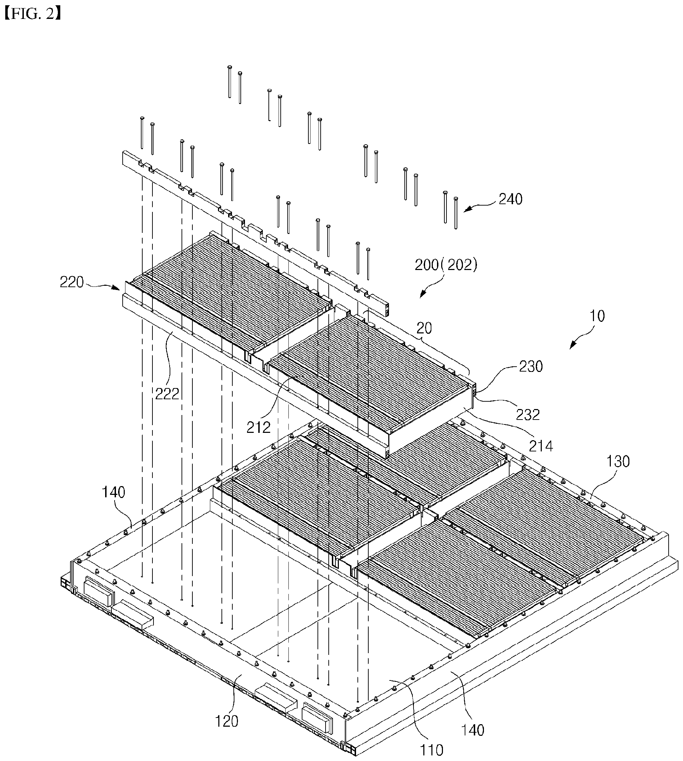

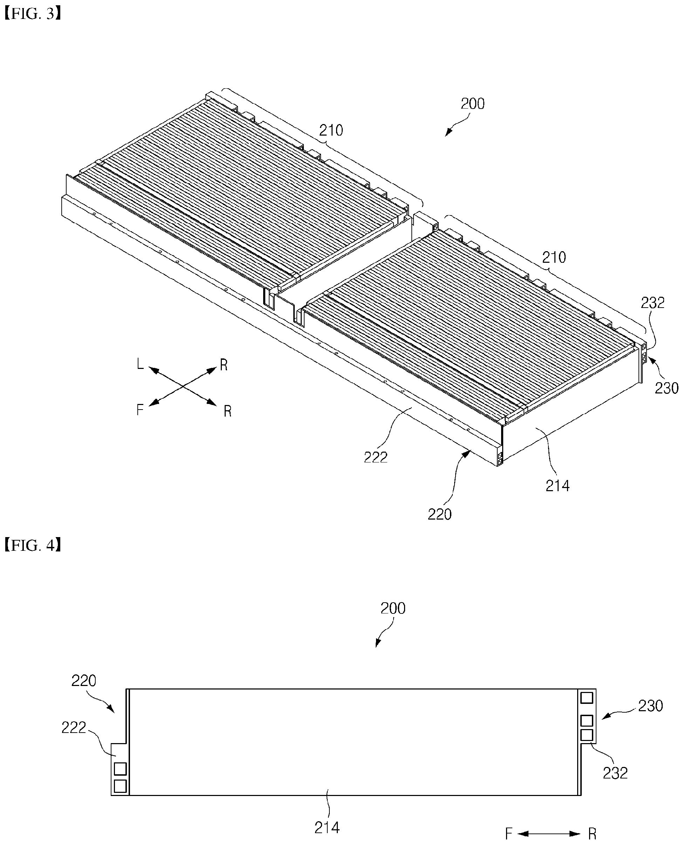

FIG. 1 is a drawing of a battery pack according to one embodiment of the present invention, FIG. 2 is a drawing of the battery pack of FIG. 1 with the frontmost battery cell assembly removed from the battery pack, and FIG. 3 is a perspective view of the battery cell assembly.

A battery pack 10 of the present invention includes a pack case 100 and a plurality of battery cell assemblies 200. The pack case 100 includes a base plate 110, a front frame 120 forming a front surface of the base plate 110, a rear frame 130 forming a rear surface of the base plate 110, and a pair of side frames 140 that are coupled at both ends to the front frame 120 and the rear frame 130. By the frames wrapping around the perimeter of the base plate 110, a receiving space is formed for loading a plurality of battery cell assemblies 200. Note that, in order to illustrate the internal structure of the battery pack 10, the drawings omit the lid that covers the top surface of the pack case 100 to seal the receiving space.

Also, the drawings show symbols of front rear left right (FRLR), which are relative to the orientation as shown in the drawings. These FRLR orientations are shown with reference to the drawings for ease of description and to avoid confusion, and may not correspond to the orientations that may be referred to for the battery pack 10 in the field. In the following description, the orientation of the front to back and left to right will be maintained with respect to the drawings.

The battery cell assembly 200, in the embodiment shown, includes a battery cell unit 210 having a plurality of cell laminates 212 and a busbar frame assembly 214 that mechanically and electrically coupled to the plurality of cell laminates 212 at transverse ends from which leads of the cell laminates 212 protrude.

In the present description, a secondary battery having a plurality of positive and negative electrodes, a separator laminated therebetween, and leads electrically connecting each of the electrode taps provided on the positive and negative electrodes is referred to as a cell laminate 212. In other words, a cell laminate 212 refers to a single finished secondary battery capable of repeated charging and discharging, and is not limited to a pouch cell, prismatic cell, or the like. Further, the battery cell unit 210 corresponds to the concept of a module of a plurality of such cell laminates 212, wherein a batch of cell laminates 212 is mechanically constrained and electrically connected by a busbar frame assembly 214 at the front and rear ends.

The battery cell assembly 200 includes a first battery cross beam 220 that couples to the busbar frame assembly 214 at the front of the battery cell unit 210, and a second battery cross beam 230 that couples to the busbar frame assembly 214 at the rear of the battery cell unit 210. The first and second battery cross beams 220, 230 serve as frames that maintain the structure of the battery cell assembly 200 and, when the battery cell assembly 200 is loaded within the pack case 100, serve as cross beams that provide rigidity in the left and right directions of the pack case 100, i.e., in the full width to transverse directions.

Referred to herein as first and second battery cross beams 220, 230 are referred to as cross beams because they function as cross beams in terms of the pack case 100, but in terms of the assembly process, they are first assembled in the form of a battery cell assembly 200 as a frame to hold the battery cell units 210. To distinguish them from pack cross beams, they are referred to as battery cross beams, and the terms "first" and "second" distinguish them within a pair of battery cross beams 220, 230, as they differ in shape depending on whether the direction in which the battery cross beams 220, 230 are loaded is forward or backward. This will be explained further with reference to the drawings.

The battery pack 10 of the present invention, in which a plurality of battery cell assemblies 200 are loaded onto a base plate 110, is fixed to the base plate 110 by means of a first battery cross beam 220 and a second battery cross beam 230 that overlap and face each other in the front-to-back direction of adjacent battery cell assemblies 200. In other words, each battery cell assembly 200 is of the same structure, and all battery cell assemblies 200 are loaded to the pack case 100 with the first and second battery cross beams 220, 230 facing in a left-to-right direction, such that the first battery cross beam 220 and the second battery cross beam 230 between neighboring battery cell assemblies 200 are in close proximity facing to each other.

This repeating face-to-face structure of the first battery cross beam 220 and the second battery cross beam 230 allows the first battery cross beam 220 and the second battery cross beam 230 between neighboring battery cell assemblies 200 to be overlapped up and down, By fixing the overlapping first battery cross beams 220 and second battery cross beams 230 to the base plate 110 in batches, it is consequently possible to fix the facing front and rear edges of the neighboring battery cell assemblies 200 to the base plate 110 simultaneously.

In one embodiment, the first and second battery cross beams 220, 230 may have a length corresponding to the distance between the pair of side frames 140, i.e., the full width length of the pack case 100. Accordingly, without the configuration of a center beam as provided in conventional battery packs, the pack case 100 of the present invention can maintain good transverse rigidity by forming a structure in which the cross beams traverse without a break in the middle of the left and right directions.

And, with respect to the paired first and second battery cross beams 220, 230, the busbar frame assemblies 214 provided on each of the plurality of battery cell units 210 may be coupled, i.e., the plurality of battery cell assemblies 200 may be fixed to the pair of first and second battery cross beams 220, 230 by bolts or the like. By having the plurality of battery cell assemblies 200 fixed to the pair of first and second battery cross beams 220, 230 in this manner, the number of processes for mounting the battery cell assemblies 200 to the pack case 100 is reduced.

Referring to the illustrated embodiment, when loading a total of six battery cell assemblies 200 onto the pack case 100, if one battery cell assembly 200 is fixed to a pair of battery cross beams 220, 230, a total of six loading processes are required, but as two battery cell assemblies 200 are fixed to a pair of battery cross beams 220, 230, the task is completed in three loading processes. Thus, by fixing a plurality of cell assemblies 200 while making the first and second battery cross beams 220, 230 a length corresponding to the full width length of the pack case 100, the rigidity of the pack case 100 can be improved, as well as the productivity of the battery pack 10.

FIG. 4 is a side view of the battery cell assembly 200 of FIG. 3. In an embodiment of the present invention, all of the battery cell assemblies 200 have the same structure. Referring to FIGS. 3 and 4, the first battery cross beam 220 has a protruding lower step 222 and the second battery cross beam 230 has a protruding upper step 232. Further, the first and second battery cross beams 220, 230 are complementary, with the upper step 232 engaging with respect to the lower step 222, such that the upper step 232 of the second battery cross beam 230 overlaps the lower step 222 of the first battery cross beam 220 in an engageable overlapping structure, and the overlapping first and second battery cross beams 220, 230 act as a single pack cross beam.

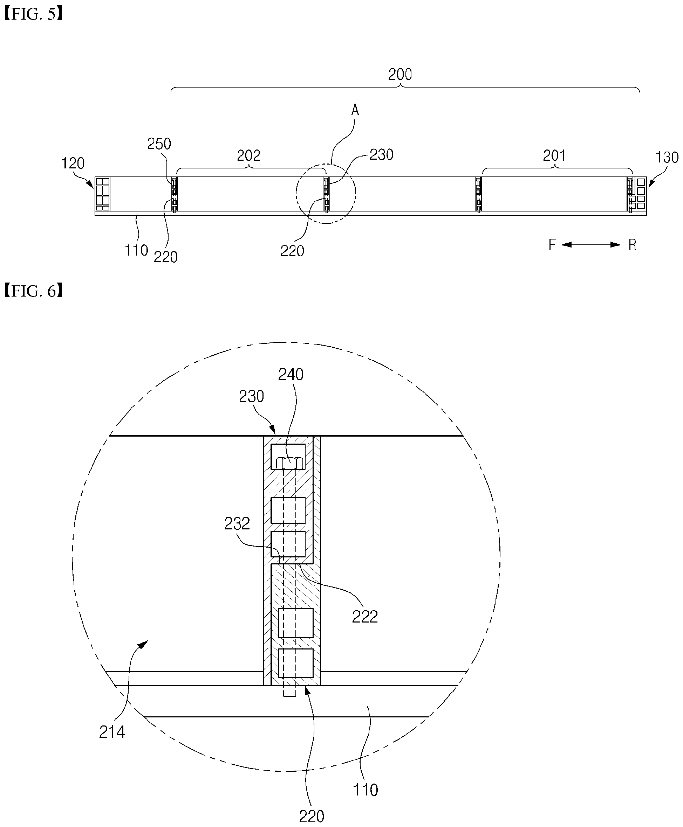

FIG. 5 is a side view with the side frame 140 removed from the battery pack 10 of FIG. 1, illustrating the connections between adjacent battery cell assemblies 200. Referring to the drawing, an overlapping structure can be seen with the lower step 222 of the first battery cross beam 220 of the right cell assembly 200 raised above the upper step 232 of the second battery cross beam 230 of the left cell assembly 200, and this overlapping structure is repeated at the front and rear edges between the battery cell assemblies 200.

FIG. 6 is an enlarged cross-sectional view of portion "A" of FIG. 5. The plurality of battery cell assemblies 200 are fixed to the base plate 110 by bolts 240 that thread through the first and second battery cross beams 220, 230, which are overlapped from top to bottom, and fixed to the base plate 110. In other words, the battery pack 10 of the present invention can utilize a structure in which the battery cross beams overlap between adjacent battery cell assemblies 200, such that the battery cell assemblies 200 can be fixed to the base plate 110 by bolts 240 that thread through the overlapping battery cross beams and fixed to the base plate 110. This bolted fixation allows for the omission of conventional welding to the cross beams, and the omission of the welding process improves the productivity of the battery pack 10 and improves space utilization by eliminating the problem of interference with the battery cell assembly 200 by welding beads.

FIGS. 5 and 6 illustrate a coupling structure between neighboring battery cell assemblies 200, wherein the battery cell assemblies 201, 202 located at the rearmost and frontmost of the battery pack 10 have no neighboring battery cell assemblies 200 behind and in front of them, respectively. Therefore, separate structures are required to complete the fixing of the rearmost and frontmost battery cell assemblies 201, 202 to the base plate 110.

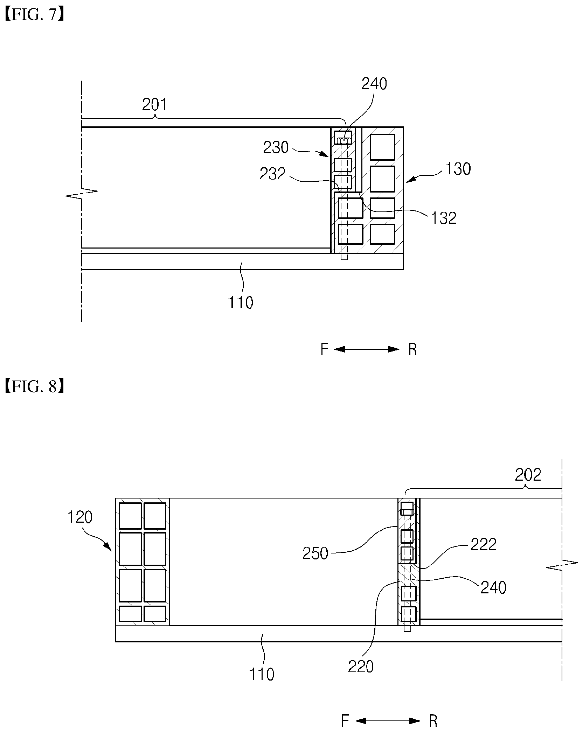

FIG. 7 is a cross-sectional view illustrating a structure in which the battery cell assembly 200 is fixed to a rear frame 130. The rear frame 130 has a lower projecting portion 132 corresponding to a lower step 222 of the first battery cross beam 220. Thereby, the battery cell assembly 200, i.e., the last battery cell assembly 201, that is, the battery cell assembly 200 that is most recently adjacent to the rear frame 130, can be fixed against the base plate 110 by having the upper step 232 of the second battery cross beam 230 overlap the lower projecting portion 132 of the rear frame 130. These lower projecting portions 132 of the rear frame 130 not only provide an efficient structure for fixing the last battery cell assembly 201 to the base plate 110, but also contribute to increasing the rigidity of the pack case 100 by increasing its cross-sectional area by the lower projecting portions 132.

Moreover, FIG. 8 is a cross-sectional view illustrating a structure in which the frontmost battery cell assembly 202 is fixed relative to the base plate 110. The pack case 100 requires space for venting and electrical connections, and the pack case 100 according to one embodiment of the present invention has such service spaces on the front frame 120 side. Thus, instead of being fixed to the base plate 110 via the front frame 120, as is the case with the last battery cell assembly 201, the battery cell assembly 202 is fixed to the base plate 110 by means of a dummy cross beam 250 shaped to correspond to the upper step 232 of the second battery cross beam 230. Referring to FIG. 8, the battery cell assembly 202 closely adjacent to the front frame 120 is overlapped with the dummy cross beam 250 approaching upwardly against the lower step 222 of the first battery cross beam 220, and bolts 240 threaded through the dummy cross beam 250 and the first battery cross beam 220 are screwed to the base plate 110.

As such, the battery pack 10 of the present invention has battery cross beams comprising a battery cell assembly 200 that overlap, within the pack case 100, with battery cross beams of other neighboring battery cell assemblies 200. Thus, the battery cell assemblies 200 can be fixed to the base plate 110 by utilizing the weights of other neighboring battery cell assemblies 200, and once all battery cell assemblies 200 have been loaded, they are in solid fixed state by the overlapping structure between the battery cross beams.

Further, utilizing the overlapping structure of the battery cross beams between adjacent battery cell assemblies 200, the battery cell assemblies 200 are fixed by bolts 240 that thread through the overlapping battery cross beams and into the base plate 110. This bolted fixation allows for the omission of welding to the cross beams.

### [Second embodiment]

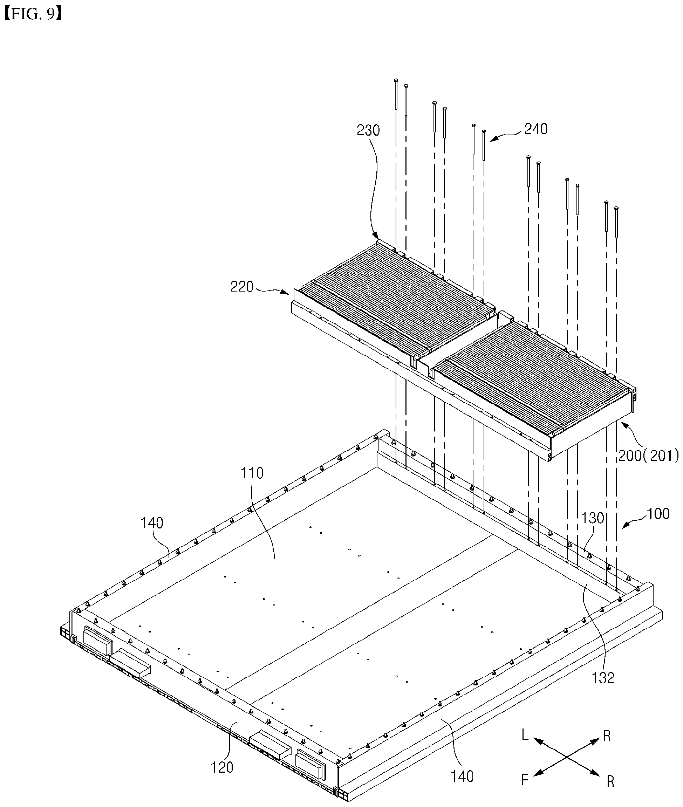

FIGS. 9 to 11 are drawings illustrating a series of manufacturing processes for a battery pack 10 according to one embodiment of the present invention. In the following description, the structure of the battery pack 10 described above in the first embodiment will be omitted.

FIG. 9 is a diagram illustrating a pack case 100 with a battery cell assembly 200 initially loaded into the pack case. A method of manufacturing a battery pack 10 according to the present invention includes a first step of preparing a pack case 100 comprising a base plate 110, a front frame 120 forming a front of the base plate 110, a rear frame 130 forming a rear of the base plate 110, and a pair of side frames 140 that are coupled at both ends to the front frame 120 and the rear frame 130.

Next, a second step of preparing a battery cell assembly 200 is performed by preparing a first battery cross beam 220 having a protruding lower step 222 and a second battery cross beam 230 having a complementary shaped upper step 232 that can be overlapping up and down with respect to the lower step 222, and securing the battery cell unit 210 between the parallel arranged first and second battery cross beams 220, 230.

In a second step, the first and second battery cross beams 220, 230 may have a length corresponding to the distance between the pair of side frames 140, and further, the plurality of battery cell units 210 may be fixed between the parallel arranged first and second battery cross beams 220, 230.

Here, the first step is to prepare the pack case 100 and the second step is to prepare the battery cell assembly 200, which may be performed as an integrated or separate process, and may be performed in different time steps.

Step 3 is the process of loading the battery cell assemblies 200 onto the pack case 100, wherein the first and second battery cross beams 220, 230 of the battery cell assemblies 200 are oriented toward the left and right sides of the pack case 100 to fix the battery cell assemblies 200 on the base plate 110. In this case, the first cell assembly 200 to be loaded is the rearmost battery cell assembly 201 proximate to the rear frame 130.

To improve the loading efficiency of the last battery cell assembly 201 and increase the rigidity of the pack case 100, the rear frame 130 of the pack case 100 prepared in the first step may have a lower projecting portion 132 corresponding to the lower step 222 of the first battery cross beam 220. Accordingly, the third step may comprise fixing the battery cell assembly 200, which is first loaded into the pack case 100, against the base plate 110 such that the upper step 232 of the second battery cross beam 230 overlaps the lower projecting portion 132 of the rear frame 130.

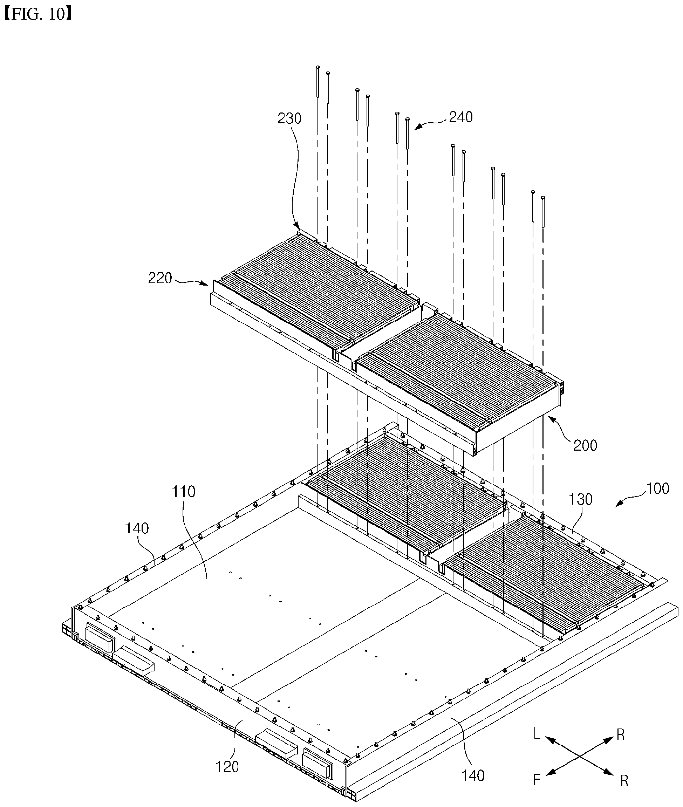

FIG. 10 is a diagram illustrating the pack case 100 in a state of further loading the battery cell assembly 200. The fourth step is to fix the new battery cell assembly 200 on the base plate 110 by seating the lower step 222 of the first battery cross beam 220 of the battery cell assembly 200 fixed on the base plate 110 via the third step so that the upper step 232 of the second battery cross beam of the new battery cell assembly 200 overlaps the lower step 222 of the first battery cross beam 220 of the battery cell assembly 200 fixed on the base plate 110.

When fixing the battery cell assembly 200 to the base plate 110 in this manner, the second battery cross beam 230 of the battery cell assembly 200 is of course fixed to the base plate 110 together with the rear frame 130, as shown in FIGS. 6 and 7. The new battery cell assembly 200 may be fixed against the base plate 110 by bolts 240 that thread through the first and second battery cross beams 220, 230 that are overlapped up and down and fixed to the base plate 110.

The fourth step is repeated in a fifth step along a direction from the rear to the front of the pack case 100 until the battery cell assemblies 200 have filled all of the receiving space of the pack case 100. In the illustrated embodiment, a total of three rows of battery cell assemblies 200 are loaded, so the fourth step of loading the battery cell assemblies 200 is repeated one more time, with the last battery cell assembly 200 loaded corresponding to the frontmost battery cell assembly 202.

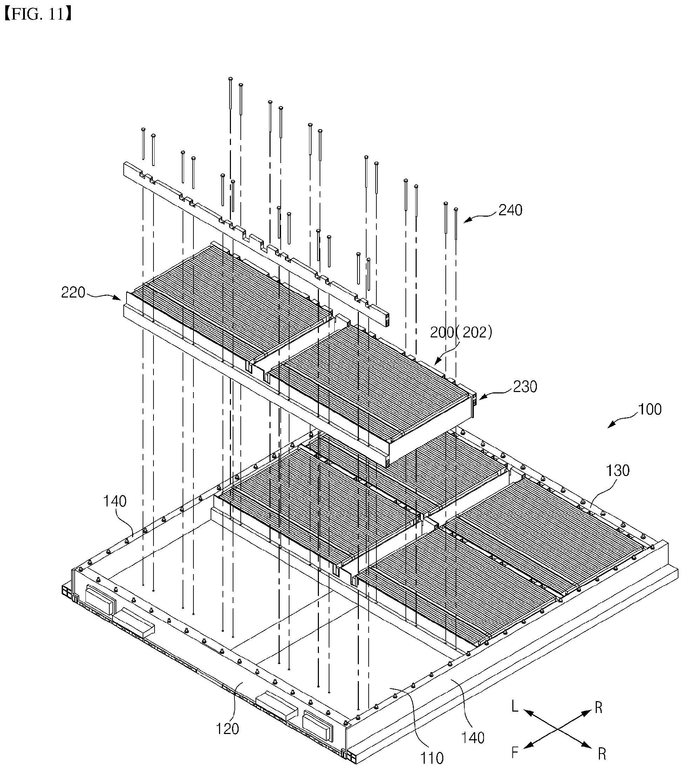

FIG. 11 is a diagram illustrating the final loading of the battery cell assembly 202 into the pack case 100. In a fifth step, a dummy cross beam 250 shaped to correspond to the upper step 232 of the second battery cross beam 230 is prepared, and the last battery cell assembly 202 to be loaded into the pack case 100 is fixed to the base plate 110 such that the dummy cross beam 250 overlaps the lower step 222 of the first battery cross beam 220. The corresponding structure of the battery pack 10 can be seen with reference to FIG. 8.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: battery pack
100: pack case
110: base plate
120: front frame
130: rear frame
132: lower projecting portion
140: side frame
200: battery cell assembly
201: rearmost battery cell assembly
202: frontmost battery cell assembly
210: battery cell unit
212: cell laminate
214: busbar frame assembly
220: first battery cross beam
222: lower step
230: second battery cross beam
232: upper step
240: bolt
250: dummy cross beam

## Claims

1. A battery pack, comprising:
a base plate;
a front frame forming a front of the base plate;
a rear frame forming a rear of the base plate;
a pair of side frames coupled at first and second opposite ends thereof to the front and rear frames, respectively; and
a plurality of battery cell assemblies disposed within a receiving space formed by the front frame, the rear frame, and the pair of side frames, wherein each of the battery cell assemblies comprises:
a battery cell unit comprising a plurality of cell laminates and a busbar frame assembly mechanically and electrically coupled to the plurality of cell laminates at transverse ends from which leads of the cell laminates protrude; and
a first battery cross beam coupled to the busbar frame assembly at a front of the battery cell unit; and
a second battery cross beam coupled to the busbar frame assembly at a rear of the battery cell unit,
wherein the plurality of battery cell assemblies are fixed to the base plate by overlapping above and below the first battery cross beam and the second battery cross beam opposite each other in a front-to-back direction of adjacent ones of the battery cell assemblies.

2. The battery pack of claim 1, wherein the first and second battery cross beams each have a length equal to a distance between the pair of side frames.

3. The battery pack of claim 2, wherein the first and second battery cross beams are coupled to the busbar frame assembly of each of the battery cell units.

4. The battery pack of claim 1, wherein each first battery cross beam comprises a protruding lower step, each second battery cross beam comprises a protruding upper step, and each pair of the first and second battery cross beams have complementary shapes overlapping above and below by engaging the upper step with respect to the lower step.

5. The battery pack of claim 4, wherein the plurality of battery cell assemblies are fixed to the base plate by bolts threaded through the first and second battery cross beams and fixed to the base plate.

6. The battery pack of claim 4, wherein the rear frame comprises a lower projecting portion aligned with the lower step of the first battery cross beam, and one of the battery cell assemblies that is nearest to the rear frame is fixed to the base plate with the upper step of the second battery cross beam overlapping above the lower projecting portion.

7. The battery pack of claim 4, further comprising a dummy cross beam having a shape complementary with the upper step of the second battery cross beam, wherein one of the cell assemblies that is nearest to the front frame is fixed to the base plate with the lower step of the first battery cross beam overlapping below the upper step of the second battery cross beam.

8. A battery pack manufacturing method, comprising:
a first step of preparing the pack case, the pack case comprising: a front frame forming a front of the base plate, a rear frame forming a rear of the base plate, and a pair of side frames coupled at first and second opposite ends thereof to the front frame and the rear frame, respectively;
a second step of preparing a first battery cell assembly by preparing a first battery cross beam having a protruding lower step, and a second battery cross beam having a complementary shaped upper step that can be overlapped above and below on the lower step, and fixing a battery cell unit between the first and second battery cross beams arranged in parallel;
a third step of fixing the first battery cell assembly to the base plate with the first and second battery cross beams of the battery cell assembly facing in a left and right direction of the pack case;
a fourth step of preparing a second battery cell assembly by repeating the second step, and seating the second battery cell assembly by overlapping above and below an upper step of a second battery cross beam of the second battery cell assembly and the lower step of the first battery cross beam of the first battery cell assembly fixed on the base plate by repeating the third step, so as to fix the second battery cell assembly to the base plate; and
a fifth step of fixing the second battery cell assembly on the base plate, and repeating the fourth step in a direction from the rear to the front of the pack case, so as to fill all of the receiving space of the pack case.

9. The method of claim 8, wherein the first and second battery cross beams have a length equal to a distance between the pair of side frames.

10. The method of claim 9, wherein during the second step, a plurality of battery cell units are fixed between the first and second battery cross beams arranged in parallel.

11. The method of claim 8, wherein the rear frame comprises a lower projecting portion corresponding to a lower step of the first battery cross beam, and during the third step, the first cell assembly to be loaded in the pack case is fixed to the base plate such that the upper step of the second battery cross beam overlaps above the lower projecting portion of the rear frame.

12. The method of claim 8, wherein during the fourth step, the second battery cell assembly is fixed to the base plate by bolts screwed to the base plate threaded through the first and second battery cross beams overlapped above and below.

13. The method of claim 11, wherein during the fifth step, a dummy cross beam in having a shape complementary with the upper step of the second battery cross beam is prepared, and the last battery cell assembly to be loaded into the pack case is fixed to the base plate by the dummy cross beam overlapping above the lower step of the first battery cross beam.
